# EUROPÄISCHE PATENTSCHRIFT

(11) **EP 3 903 938 B1**
(45) Veröffentlichungstag und Bekanntmachung des Hinweises auf die Patenterteilung: **24.05.2023**
(21) Anmeldenummer: 20214529.8
(22) Anmeldetag: 16.12.2020
(51) Int. Cl.: B01J 47/024, B01D 24/04, B01D 27/02, C02F 1/42

(54) **WASSERAUFBEREITUNGSMODUL**
WATER PROCESSING MODULE
MODULE DE TRAITEMENT DE L'EAU

(30) Priorität: 28.04.2020 DE 102020111555
(43) Veröffentlichungstag der Anmeldung: 03.11.2021
(73) Patentinhaber: Völker, Manfred, 63825 Blankenbach (DE)
(72) Erfinder: Völker, Manfred, 63825 Blankenbach (DE)
(74) Vertreter: Flosdorff, Jürgen

(56) Entgegenhaltungen:
- DE-A1- 3 008 208
- DE-A1-102016 108 866
- FR-A1- 2 368 993
- US-B2- 9 873 066

## Beschreibung

Ziel dieser Entwicklung ist es einen großvolumigen Filterbehälter zu entwickeln, z.B. für die Aufnahme von Filtermaterialien die nach Gebrauch vor Ort nicht regenerierbar sind, wie z.B. Mischbettharze und Filterkohle. Derartige Filterbehälter sind beispielsweise aus der DE 30 08 208 A1 bekannt.

Dabei sollen die Filtermaterialen einfach auszutauschen sein, die Filterkonstruktion eine höchstmögliche Ausbeute der Filtermaterialien ermöglichen und darüber hinaus auch möglichst hohen Hygieneanforderungen hinsichtlich Handhabung und Totraumfreiheit gewährleisten.

Die Einsatzgebiete sind für Labor-, Pharma-, Trinkwasser- und med.tech. Anwendungen vorgesehen.

Dabei ist die Aufnahme und Verwendung unterschiedlichster Filtermedien auch z.B. für Arsen und Nitrat möglich, und nicht nur auf vor Ort nicht regenerierbare Filtermaterialien begrenzt.

Um z.B. das für Laboranwendungen gebrauchsfertiges Reinstwasser aufzubereiten werden unterschiedlichste Techniken angewandt. Die vorwiegend eingesetzten Verfahren sind mehrstufigen Druck-Filtrationsverfahren wie z.B. Umkehrosmosen mit nachfolgenden Filtrationsstufen, bis hin zu chemischen Austauschfiltrationen wie z.B. Vollentsalzer bzw. Mischbettharzen und nachfolgenden Polisherharzen.

Beim Einsatz mehrstufiger Druckfiltrationsverfahren werden in der Regel wenige Verbrauchsmaterialen benötigt, die Technik ist jedoch wartungsintensiv, ein störungsbedingter Ausfall verursacht hohe Kosten bedingt durch den Stillstand teurer Folgegeräte und Arbeitszeit.

Die chemische Austauschfiltration mit Mischbettharzen und nachfolgenden Polisherharzen ist technisch unproblematisch verursacht jedoch höhere Gebrauchskosten.

Diese Gebrauchskosten sind zum einen dadurch begründet, dass ein Filtermedientausch vor Ort problematisch ist. Das Herausnehmen der Filtermedien aus dem Aufnahmebehälter kann eine Verschmutzung der Sauberbereiche mit Partikeln verursachen. Rückständige Flüssigkeit läuft beim Öffnen aus den Behältern. Zum Entleeren und Wiederbefüllen wird Equipment benötigt. Deshalb führt mittels aufwändiger Logistik ein mobiler Service den Austausch durch.

Der ungenügende Wirkungsgrad bedingt durch mangelhafte Durchströmung des Filtermediums verursacht hohe Folgekosten pro Liter gefiltertes Reinstwasser Hinsichtlich Hygiene und Qualität ist eine einfache, aber zuverlässige Trennung zwischen primär-u. sekundär Filterseite absolut notwendig. Auch die fehlende Möglichkeit einer Beurteilung der Filtrationsqualität (Probeentnahme) ist nachteilhaft. Weitere Nachteile können auch die fehlende totraumfreie Überströmung der Flüssigkeitsführung und die fehlende Reinigungsmöglichkeit des Filteraufnahmebehälters sein.

Notwendige Verbesserungen, Zweck und Ziel dieser Erfindung sind deshalb der sichere, anwenderfreundliche und schnelle Filtermedien/material- und oder auch Harzaustausch. Eine besondere Herausforderung ist dabei die Trennung zwischen der Primär- und Sekundärseite des Filtermediums.

Eine große Bedeutung kommt der Reduzierung der Austauschintervalle (Harzwechsel durch bessere Harzausnutzung) zu, um möglichst niedrige Kosten pro Liter Filtrat zu erzielen.

Neben einem großen Einsatzbereich mit unterschiedlichen Filtermedien ist eine günstige gute Logistik bzw. Lagerhaltung erforderlich.

Für die Probenentnahme soll eine Entnahmetechnik zum Einsatz kommen die auch bei problematischen Flüssigkeiten eine sichere Flüssigkeitsführung direkt ohne Luftkontakt in den Probebehälter zulässt.

Filterwechsel sollen möglichst ohne Verschütten oder überlaufende bzw. austretentende Flüssigkeit aus dem Filtergehäuse möglich sein. Die beim Wechsel eingebrachte Luft in das Filtergehäuse soll einfach abzuscheiden sein.

Unterschiedliche Filtereinsätze gleicher Bauart sollen gut zu unterscheiden sein,
Diese Aufgabe wird erfindungsgemäß wirkungsvoll dadurch gelöst, dass zur Herstellung hochreiner Flüssigkeit der Fokus nicht nur auf das Verfahren, sondern hauptsächlich auf die in Wasseraufbereitungsgeräten verwendeten - vor Ort nicht oder schlecht regenerierbaren- Filtermaterialien, deren Gebrauch und konstruktive Ausführung gelegt ist.

Dazu sind die Filtermaterialien entweder in wegwerf- oder wiederverwendbaren, vollständig gefüllten, Filtereinsätzen eingebracht. Die Filtereinsätze sind einfachst in ein rohrartiges Wasseraufbereitungsmodul einsetzbar, wobei alleine durch die Lage des Filtereinsatzes, und dessen Abdichtung zum Aufnahmebehälter, eine vollständige Trennung zwischen Primär- und Sekundärseite des Filters gewährleistet ist.

Durch die speziellen, über Zu- und Abfluss der Filtereinsätze verteilten eiförmigen Öffnungen, wird die Flüssigkeit in den Filtermaterialien so verteilt, dass eine größtmögliche Ausbeute gewährleistet ist.

Sowohl die Zuführung und Ableitung der Flüssigkeit in, aus, und durch das Wasseraufbereitungsmodul gewährleisten darüber hinaus eine gleichmäßige, möglichst totraumfreie Flüssigkeitsverteilung.

Ein Wechsel der Filtereinsätze ist ohne Verschütten und Überlaufen des Wasseraufbereitungsmodules möglich.

Weitere Einzelheiten und Vorteile sind in den nachfolgend dargestellten Figuren beschrieben.

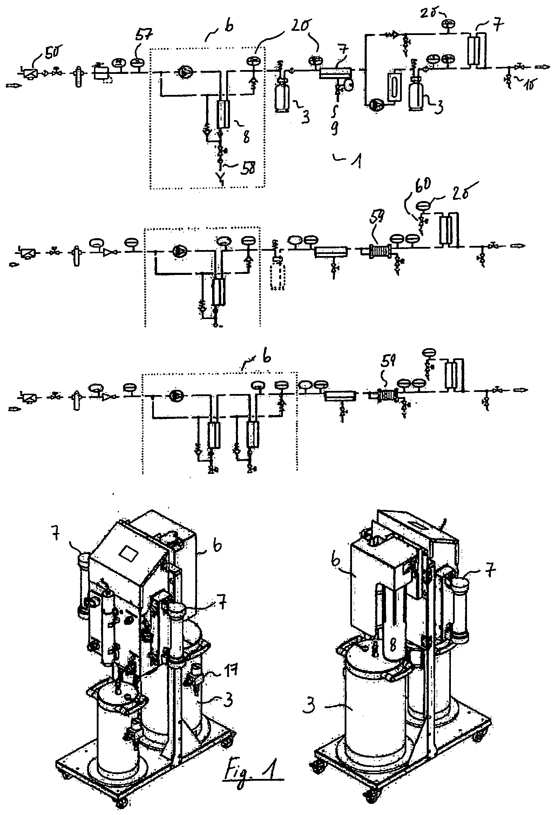

Dabei zeigt Figur 1 einen Flussplan (1), der an seinem Eingang (50) über einem Rohrtrenner mit Rohwasser verbunden ist. Dieses Rohwasser wird über nachfolgend beschriebene Hauptkomponenten zu einer gebrauchsfertigen hochreinen Flüssigkeit aufbereitet und beispielsweise als Zwischenprodukt an der Entnahmestelle (9) oder als finales Produkt an der Entnahmestelle (10) entnommen.

Beispielsweise kann das Rohwasser über eine Umkehrosmose (6) und oder durch eine Wasseraufbereitungsmodul z. B Vollentsalzer (3) in einer ersten Stufe aufbereitet und an Anschluss (9) über einen Ultra-/ Sterilfilter als Zwischenprodukt entnommen werden. Zur weiteren Aufbereitung wird die von chemischen Inhaltsstoffen vorgereinigte Flüssigkeit über ein weiteres Wasseraufbereitungsmodul (3) z.B. gefüllt mit Polisherharz von den restlichen chemischen Inhaltstoffen gereinigt und über einen Steril-, Ultrafilter mikrobiologisch gereinigt zu Entnahmestelle (10) geführt.

Um Stagnation zu vermeiden, kann die Flüssigkeit, sowohl während einer Entnahme, als auch vorzugsweise in entnahmefreien Zeiten mittels Pumpe und UV-Lampe zirkulieren. Es versteht sich, dass die wesentlichen Flüssigkeitsparameter wie z.B. Temperatur und Leitfähigkeit mittels Sensoren (20) überwacht werden.

Weitere in Wasseraufbereitungen übliche Einrichtungen wie z.B. Trockenlaufschutz, Druckminderer und Vorfiltration, Pumpen, Flussmesser und UV Lampe sind dargestellt, aber nicht näher beschrieben. Wobei der Flussmesser (57) u. andere Sensoren auch an anderen messtechnisch relevanten Stellen wie z.B. am Drainageausgang (58) einsetzbar ist.

Figur 1 zeigt Flussplanvarianten die aufzeigen, dass durch den Einsatz eines EDI, Elektrodionisationsmoduls (59), z. B. ein Wasseraufbereitungsmodul (3) entfallen könnte oder durch den Einsatz einer doppelstufigen Umkehrosmose beide Wasseraufbereitungsmodule (3) entfallen könnten. Die Kombination und Variation von EDI (59) Umkehrosmose (6) und Wasseraufbereitungsmodul (3) ermöglichen höchste Wasserqualität und können Wechselintervalle derselben reduzieren.

Ein beispielhafter Aufbau eines auf Flussplan (1) aufgebauten Verfahrens ist Wasseraufbereitungsgerät (2), perspektivisch in Figur 1 dargestellt.

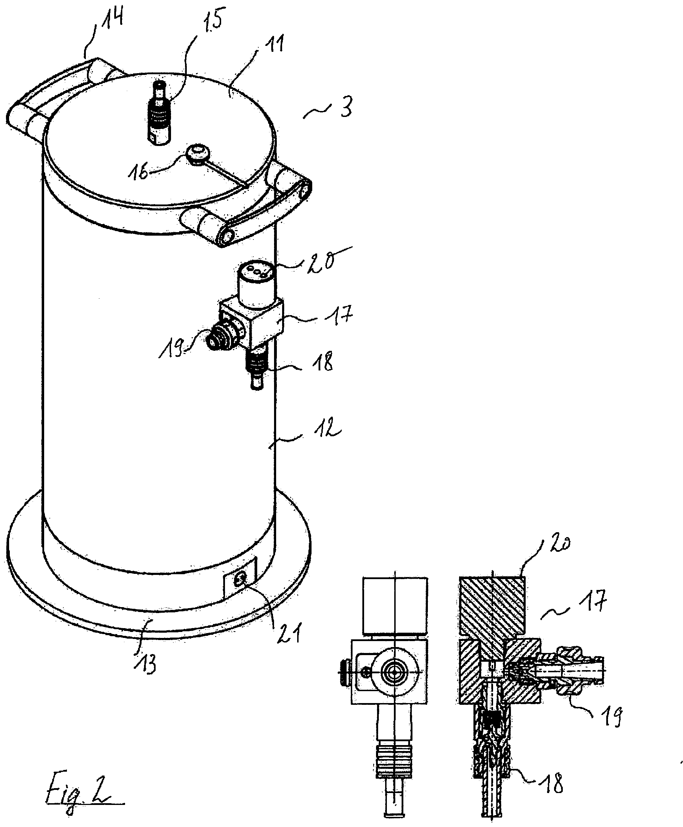

Figur 2 zeigt die von außen sichtbaren Komponenten des Wasseraufbereitungsmodules (3), bestehend aus einem zylindrischen Rohrteil (12), aus einem Boden mit Platte (13) zum darauf treten beim Öffnen des Deckels (11).

Seitlich kann optional ein Funktionsblock (17)z.B. zur Messung von Leitfähigkeit und Temperatur u. bei Bedarf Durchfluss (20), einer Probeentnahme (19) und einer Anschlusskupplung (18) angebracht werden. Der Funktionsblock (20) kann eine Anzeige z.B. in Form einer Ampel und oder einen akustischen Signalgeber enthalten die den Verbrauchszustand der eingesetzten Filtermedien/material signalisiert und auf einen evtl. Austausch hinweist.

Im Bodenteil (13) ist optional eine weitere Entnahme (21) angebracht. Die Griffe (14), eine Anschlusskupplung (15) und eine Entlüftung (16) vervollständigen den Deckel (11).

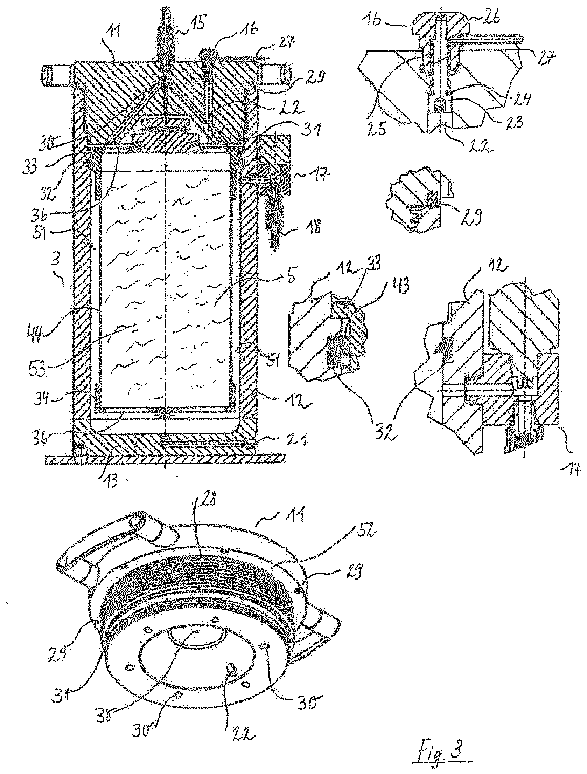

Figur 3 zeigt das Wasseraufbereitungsmodul (3) detailliert und im Schnitt.

Vorteilhafterweise fließt die Flüssigkeit über die Anschlusskupplung (15) in den Deckel (11) und durch den im Deckel befindlichen kreisförmige/schräg angeordnete Bohrungen (30) und eine in der Mitte des Deckels befindlichen Bohrung zum unteren Rand des Deckels. Von dort über die kreisförmig angeordneten, ei-,lanzettförmigen Filterdurchlassöffnungen (36), des Filtereinsatzes (4/5) durch das Filtermaterial (53) und tritt am unteren Filterhalter (34) aus den kreisförmig angeordneten, ei- ,lanzettenförmigen Filterdurchlassöffnungen (36) aus dem Filtereinsatzes (4/5) aus und fließt über Ringspalt (51) und Funktionsblock (17) und oder über Anschluss (21) aus. Anschluss (21), kann innenseitig bei nicht Benutzung verschlossen werden.

Eine Umkehr der Flüssigkeitsführung ist möglich.

Dichtung (32) sorgt für eine vollständige Trennung zwischen primär und sekundär Seite des Filtereinsatzes (4/5) durch umlaufende Dichtung an Dichtfläche (43) des oberen Filterhalters (33). Der Dichtring (32) wird in eine Nut des Rohres (12) eingebracht. Vorzugsweise ist Dichtring (32) als Lippendichtung ausgebildet. Es ist jedoch jede andere in diesem Sinne mögliche Dichtung einsetzbar, wie auch die Lage des Dichtringes am Filtereinsatzes (4/5) möglich ist.

Zur Unterstützung der Rohrwandung (12) gegen Durchbiegung und zur Gewährleistung der Abdichtung zwischen Primär- und Sekundärseite des Filtereinsatzes (4/5) kann eine zusätzliche Verstärkung der Rohrwandung (12) im Bereich des Gewindes (28) und der Dichtungen (32/31) in Betracht gezogen werden.

Über eine Entlüftungsbohrung (22), kann die im Innenraum des Filtereinsatzes (4/5) und auf der Oberseite des Filtereinsatzes (4/5) befindliche Luft, durch Drücken des Entlüftungsknopfes (26) aus dem Entlüftungsschlauch (27) austreten.

Der Entlüftungsschlauch (27) dient der Weiterleitung der Luft- und des Luft-Wassergemisches aus hygienischen Gründen und der Probeentnahme primärseitiger Flüssigkeit.

Das Entlüftungsventil (16), ist mittels Feder (25) und Dichtung (24) selbstschließend. Durch Drücken des Knopfes (26) wird der Entlüftungskanal (22) freigegeben. Vorzugsweise wird der Entlüftungsknopf (26) in einer Signalfarbe ausgeführt.

Deckel (11) hat ein sägezahnartiges Gewinde (28) welches in das korrespondierende Gewinde des Rohres (12) eingreift. Um die Abdichtung des Deckels (11) zu gewährleisten, ist ein Dichtring (31) in eine umlaufende Nut des Deckels (11) eingebracht. Der Deckel (11) hat am umlaufenden Rand (52), eingesetzte ballige Noppen (29), die einen Abstand des Deckels (11) vom oberen Rand des Rohres (12) gewährleisten, um ein Festsaugen des Deckels (11) zu verhindern. Deckel (11) ragt tief in das Rohr (12) ein, um das Flüssigkeitsvolumen im Wasseraufbereitungsmodul (3) auf ein Minimum zu reduzieren, damit beim Öffnen des Deckels (11) und herausnehmen des Filtereinsatzes (4/5) keine Flüssigkeit austritt.

Es ist auch üblich anstelle des Gewindes (28) einen hier nicht dargestellten Bajonett -Verschluss einzusetzen.

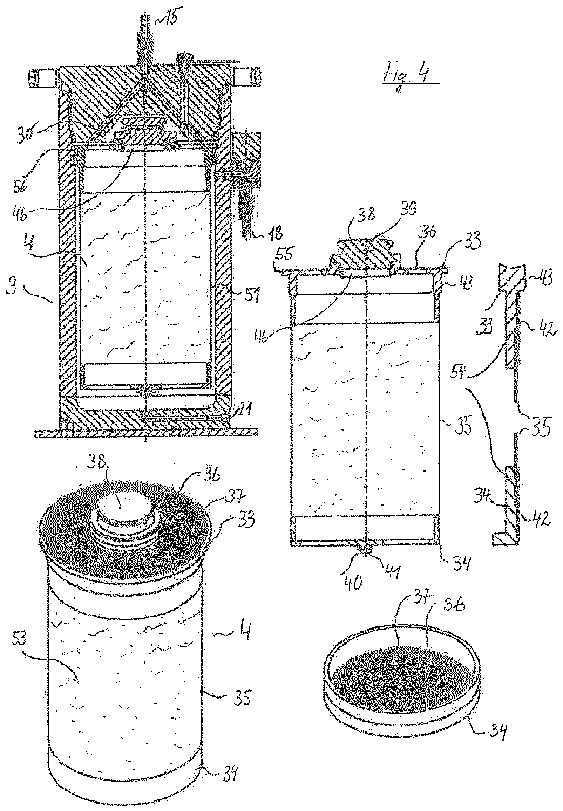

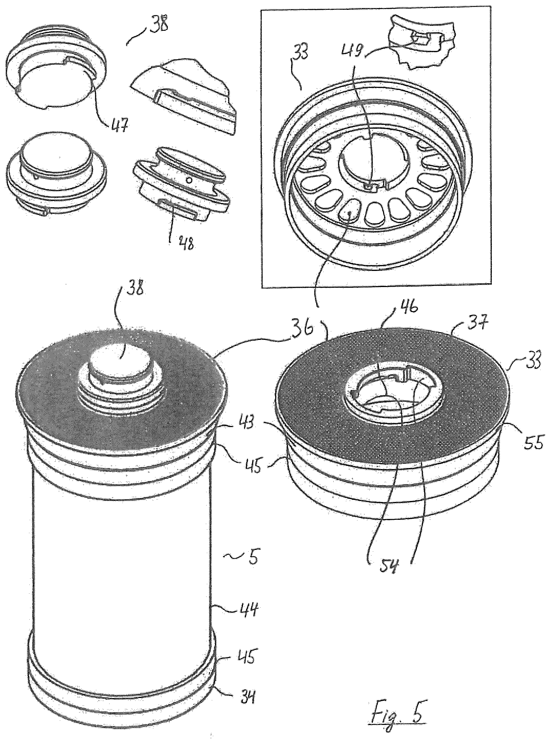

Figur 4 und 5 zeigen Moduleinsatz (4/5), wobei Moduleinsatz (4) als Disposable und Moduleinsatz (5) wiederverwendbar einsetzbar ist.

Bei geöffnetem Deckel (11) des Moduls (3) wird der Moduleinsatz (4/5) in Behälter (3) eingesetzt. Moduleinsatz (4/5) sitzt mittels Auskragung (55) des Filterhalter (33) auf einem Absatz (56) des Rohres (12).

Zur besseren Handhabung der Module (4/5), kann eine Schlaufe über Bohrung (39), oder grundsätzlich am Filterhalter (33), angebracht werden.

Moduleinsatz (4/5) bestehen aus einem oberen Filterhalter (33) und einem unteren Filterhalter (34). Die Filterhalter (33/34) sind bei Moduleinsatz (4) mit einem Folienschlauch (35)-, bei Moduleinsatz (5) mit einem harten, rohrförmigen Zylinder verbunden.

Die Filterhalter (33/34) selbst ist mit einem Filtersieb (37) abgedeckt, bzw. mit den Stegen, zwischen den ei-, lanzettförmigen Durchlassöffnungen (36), verbunden, um das Filtermaterial (53) im inneren der Moduleinsätze (4/5) zu halten.

Die Maschenweite des Filtersiebes (37) ist dem Filtermaterial (53) angepasst.

Figur 4 zeigt das Filtereinsatz (4) als Disposable-Ausführung. Dazu wird über kleine Absätze (45) der Filterhalter (33/34) ein Folienschlauch (35) gezogen, und mittels Klebeband (42), voll umfänglich mit den Filterhaltern (33/34) verbunden. Der Folienschlauch (35) kann auch mittels Schweißung an den Filterhalter (33/43) befestigt werden. Zum Befüllen des Moduls (4) wird die Füllöffnung (46) genutzt, das Filtermaterial (53) eingebracht, und anschließend mittels Verschlussdeckel (38) wieder verschlossen.

Figur 5 zeigt die Ausführung des Filtereinsatzes (5), als wiederbefüllbaren Filtereinsatz. Dazu besteht die Möglichkeit neben dem Folienschlauch (35) ein zylindrisches hartschaliges Material (44) an die Filterhalter (33/34) anzubringen.

Der obere Verschlussdeckel (38) kann über die Öffnung (46) des oberen Filterhalters (33) in zwei Riegelöffnungen (54) eingesetzt werden. Riegel (47) greifen mit ihrer Riegeleinrastung (48) in eine Rastnase (49) ein. Je nach Ausbildung der Riegeleinrastung (48) und Rastnase (49), besteht die Möglichkeit den Verschlussdeckel zu öffnen, oder so zu gestalten, daß er nur zerstörend geöffnet werden kann.

Zur Unterscheidung unterschiedlicher Filtereinsätze (4/5) befüllt mit unter-schiedlichen Filtermaterialien oder Chargen kann Verschlussdeckel farblich oder anders gekennzeichnet sein. Um das Filtermaterials (53) zu entleeren, können die Filtereinsätze (4/5) bei geöffneten Verschlussdeckel (38), mittels Aufhängezapfen (40) aufgehängt und entleert werden.

**Legende:**

| | |
|---|---|
| 1. | Flussplan |
| 2. | Wasseraufbereitungsgerät |
| 3. | Wasseraufbereitungsmodul |
| 4. | Disposable Filtereinsatzeinsatz |
| 5. | Wiederbefüllbarer Filtereinsatzeinsatz |
| 6. | Umkehrosmoseeinheit |
| 7. | Steril- und oder Ultrafilter mit Schnellwechselhalter |
| 8. | Umkehrosmosemembrane |
| 9. | Entnahmestelle 1 |
| 10. | Entnahmestelle 2 |
| 11. | Deckel |
| 12. | Rohr |
| 13. | Boden mit Platte |
| 14. | Deckelgriffe |
| 15. | Anschlusskupplung |
| 16. | Entlüftung |
| 17. | Funktionsblock |
| 18. | Anschlusskupplung |
| 19. | Probeentnahme |
| 20. | Leitfähigkeits-, Temperaturmessung |
| 21. | Untere Entnahme |
| 22. | Entlüftungsbohrung |
| 23. | Entlüftungsventil |
| 24. | Entlüftungsdichtung |
| 25. | Entlüftungsfeder |
| 26. | Entlüftungsknopf |
| 27. | Entlüftungsschlauch und Möglichkeit zur Probeentnahme |
| 28. | Deckelgewinde oder wahlweise Bajonettverschluss |
| 29. | Deckelabstandshalter |
| 30. | Flüssigkeitsverteiler |
| 31. | Dichtring |
| 32. | Moduleinsatzdichtung |
| 33. | Filterhalter oben |
| 34. | Filterhalter unten |
| 35. | Folienschlauch |
| 36. | Filterdurchlassöffnungen |
| 37. | Filtersieb |
| 38. | Verschlussdeckel |
| 39. | Öffnung Halteschlaufe |
| 40. | Aufhängzapfen |
| 41. | Öffnung Halteschlaufe |
| 42. | Klebeband |
| 43. | Dichtfläche oben |
| 44. | Wiederbefüllbares Moduleinsatzrohr |
| 45. | Anschlag Folienschlauch |
| 46. | Füll- u. Entleerungsöffnung |
| 47. | Riegel |
| 48. | Riegeleinrastung |
| 49. | Rastnase |
| 50. | Rohwassereingang |
| 51. | Ringspalt |
| 52. | Umlaufender Rand des Deckes |
| 53. | Filtermaterial |
| 54. | Riegel |
| 55. | Auskragung Filterhalter |
| 56. | Absatz Rohr |
| 57. | Flussmesser |
| 58. | Drainageausgang |
| 59. | EDI (Elektrodionisationsmodul) |
| 60. | Spülventil |

## Patentansprüche

1. Wasseraufbereitungsmodul mit einem rohrförmigen Aufnahmebehälter (12) mit einem Bodenteil (13) und einem lösbaren Deckel (11), durch den die aufzubereitende Flüssigkeit oben ins Innere des Aufnahmebehälters zuführbar ist,
einem rohrförmigen Filtereinsatz (4,5), der durch eine ringförmige Dichtung (32) gegenüber der Innenwand des Aufnahmebehälters (12) abgedichtet ist,
und mit wenigstens einer Entnahmeöffnung für aufbereitete Flüssigkeit, die durch die Wand des Aufnahmebehälters und/oder das Bodenteil (13) verläuft,
**dadurch gekennzeichnet,**
**dass** an der Oberseite des Deckels (11) eine Anschlusskupplung (15) für die zuzuführende Flüssigkeit befestigt ist, die mit kreisförmig angeordneten, schräg zum unteren Rand des Deckels verlaufenden Durchgangsbohrungen (30) in Verbindung steht,
**dass** der Filtereinsatz (4, 5) lösbar in die Innenwand des Aufnahmebehälters (12) eingehängt ist,
**dass** der Filtereinsatz (4, 5) am oberen Ende mit einem oberen Filterhalter (33) verbunden ist, der auf einem inneren Absatz der Innenwand des Aufnahmebehälters (12) aufliegt,
**dass** der obere Filterhalter (33) eine durch einen Verschlussdeckel (38) verschließbare Einfüllöffnung für das Filtermaterial wie Mischbettharz oder Aktivkohle aufweist und
**dass** der Deckel (11) an seiner Unterseite einen mittigen Hohlraum zur Aufnahme des Verschlussdeckels (38) aufweist,
**dass** das untere Ende des Filtereinsatzes (4, 5) mit einem unteren Filterhalter (34) verbunden ist, und
**dass** beide Filterhalter (33, 34) kreisförmig angeordnete Durchgangsöffnungen (36) aufweisen, die von Filtersieben (37) überdeckt sind.

2. Wasseraufbereitungsmodul nach Anspruch 1,
**dadurch gekennzeichnet,**
**dass** der Deckel (11) mit einem Außengewinde in ein Innengewinde des Aufnahmebehälters (12) eingeschraubt ist, oder dass anstelle der Gewinde ein Bajonett-Verschluss ausgebildet ist.

3. Wasseraufbereitungsmodul nach Anspruch 1,
**dadurch gekennzeichnet,**
**dass** die Durchgangsöffnungen (36) eine Ei-Form oder ein Lanzettenform haben.

4. Wasseraufbereitungsmodul nach Anspruch 1,
**dadurch gekennzeichnet,**
**dass** an dem Verschlussdeckel (38) eine Schlaufe befestigbar ist, mit der der Filtereinsatz (4, 5) aus dem Aufnahmebehälter (12) herausziehbar ist.

5. Wasseraufbereitungsmodul nach einem der Ansprüche 1 bis 4,
**dadurch gekennzeichnet,**
**dass** ein Entlüftungskanal (22) durch den Deckel (11) verläuft, der den Hohlraum unter dem Deckel (11) mit der Außenseite verbindet und der mit einem Entlüftungsknopf (26) versehen ist.

6. Wasseraufbereitungsmodul nach einem der Ansprüche 1 bis 5,
**dadurch gekennzeichnet,**
**dass** an der Seitenwand des Aufnahmebehälters (12) ein Funktionsblock (17) mit einer Anschlusskupplung (18) zur Entnahme von aufbereiteter Flüssigkeit und einem Probeentnahmeventil (19) sowie weiteren Funktionselementen (20) angeordnet ist.

## Claims

1. A water processing module with a tubular receiving container (12) with a base member (13) and a releasable cover (11), through which the liquid to be processed may be supplied from above into the interior of the receiving container,
a tubular filter element (4,5), which is sealed by an annular seal (32) with respect to the inner wall of the receiving container (12) and with at least one removal opening for processed liquid, which extends through the wall of the receiving container and/or the base member (13),
**characterised in that**,
fastened to the upper side of the cover (11) there is a connector coupling (15) for the liquid to be supplied, which is in communication with circularly arranged through openings (30), which extend obliquely to the lower edge of the cover,
that the filter element (4, 5) is releasably suspended in the inner wall of the receiving container (12),
that the filter element (4, 5) is connected at its upper end to an upper filter holder (33), which rests on an inner shoulder on the inner wall of the receiving container (12), that the upper holder (33) has a filling opening for the filter material, such as mixed bed resin or activated carbon, which may be closed by a closure cover (38) and
that the cover (11) has a central cavity on its under side for receiving the closure cover (38), that the lower end of the filter element (4,5) is connected to a lower filter holder (34) and
that both filter holders (33, 34) have circularly arranged through openings (36), which are covered by filter strainers (37).

2. A water processing module as claimed in Claim 1,
**characterised in that**,
the cover (11) is screwed with an outer screw thread into an inner screw thread on the receiving container (12) or that instead of the screw thread a bayonet fitting is provided.

3. A water processing module as claimed in Claim 1,
**characterised in that**,
the through openings (36) are of egg shape or of lancet shape.

4. A water processing module as claimed in Claim 1,
**characterised in that**,
a loop may be fastened to the closure cover (38), with which the filter element (4,5) may be lifted out of the receiving container (12).

5. A water processing module as claimed in one of Claims 1 to 4,
**characterised in that**,
a venting passage (22) extends though the cover (11), which connects the cavity below the cover (11) to the exterior and which is provided with a venting button (26).

6. A water processing module as claimed in one of Claims 1 to 5,
**characterised in that**,
arranged on the side wall of the receiving container (12) there is a functional block (17) with a connector coupling (18) for the removal of processed liquid and a sample removal valve (18) and further functional elements (20).

## Revendications

1. Module de traitement de l'eau avec un réservoir de réception (12) tubulaire avec une partie de fond (13) et un couvercle amovible (11), par lequel le liquide à traiter peut être alimenté en haut à l'intérieur du réservoir de réception,
un insert de filtre (4, 5) tubulaire qui est rendu étanche par un joint étanche (32) annulaire par rapport à la paroi intérieure du réservoir de réception (12),
et avec au moins une ouverture de prélèvement pour du liquide traité qui s'étend à travers la paroi du réservoir de réception et/ou de la partie de fond (13),
**caractérisé en ce que**
un couplage de raccordement (15) pour le liquide à alimenter est fixé au côté supérieur du couvercle (11), lequel est en liaison avec des perçages débouchants (30) s'étendant en biais par rapport au bord inférieur du couvercle, agencés de manière circulaire,
l'insert de filtre (4, 5) est accroché de manière amovible dans la paroi intérieure du réservoir de réception (12),
l'insert de filtre (4, 5) est relié à l'extrémité supérieure à un support de filtre (33) supérieur qui repose sur un épaulement intérieur de la paroi intérieure du réservoir de réception (12),
le support de filtre (33) supérieur présente une ouverture de remplissage refermable par un couvercle de fermeture (38) pour le matériau de filtre tel que de la résine à lit mélangé ou du charbon actif et
le couvercle (11) présente au niveau de son côté inférieur un espace creux médian pour la réception du couvercle de fermeture (38),
l'extrémité inférieure de l'insert de filtre (4, 5) est reliée à un support de filtre (34) inférieur, et
les deux supports de filtre (33, 34) présentent des ouvertures débouchantes (36) agencées de manière circulaire qui sont recouvertes par des tamis filtrants (37).

2. Module de traitement de l'eau selon la revendication 1,
**caractérisé en ce que**
le couvercle (11) est vissé avec un filet extérieur dans un filet intérieur du réservoir de réception (12), ou qu'une fermeture à baïonnette est réalisée à la place du filet.

3. Module de traitement de l'eau selon la revendication 1,
**caractérisé en ce que**
les ouvertures débouchantes (36) présentent une forme d'oeuf ou une forme de lancette.

4. Module de traitement de l'eau selon la revendication 1,
**caractérisé en ce que**
une boucle peut être fixée au couvercle de fermeture (38), avec laquelle l'insert de filtre (4, 5) peut être retiré du réservoir de réception (12).

5. Module de traitement de l'eau selon l'une quelconque des revendications 1 à 4,
**caractérisé en ce que**
un canal de ventilation (22) s'étend à travers le couvercle (11), lequel relie l'espace creux sous le couvercle (11) au côté extérieur et lequel est pourvu d'un bouton de ventilation (26).

6. Module de traitement de l'eau selon l'une quelconque des revendications 1 à 5,
**caractérisé en ce que**
un bloc fonctionnel (17) avec un couplage de raccordement (18) pour le prélèvement de liquide traité et une soupape de prélèvement d'échantillon (19) ainsi que d'autres éléments fonctionnels (20) est agencé au niveau de la paroi latérale du réservoir de réception (12).
